Europäisches Patentamt

European Patent Office

Office européen des brevets

(11) Publication number: **0 143 550**
A1

(19)

# EUROPEAN PATENT APPLICATION

(21) Application number: 84307350.3

(22) Date of filing: 25.10.84

(51) Int. Cl.⁴: **G 01 K 11/16,** G 01 K 3/00, B 65 D 79/02

(30) Priority: 27.10.83 US 545910

(71) Applicant: **BIOSYNERGY INC., 724 West Algonquin Road, Arlington Heights Illinois 60005 (US)**

(72) Inventor: **Suzuki, Fred K., 710 South Kennicott Avenue, Arlington Heights Illinois 60005 (US)**
Inventor: **Muir, Sharon B., 1114 South Fernandez Avenue, Arlington Heights Illinois 60005 (US)**
Inventor: **Yoshida, Noble H., 1323 South Walnut Avenue, Arlington Heights Illinois 60005 (US)**

(43) Date of publication of application: 05.06.85
Bulletin 85/23

(84) Designated Contracting States: **AT CH DE FR GB IT LI SE**

(74) Representative: **Collier, Jeremy Austin Grey et al, J.A.Kemp & Co. 14, South Square Gray's Inn, London WC1R 5EU (GB)**

(54) Liquid crystal temperature-monitoring means and method.

(57) A liquid crystal temperature-monitoring means and method embody the use of a cholesteric liquid crystalline phase material capable of exhibiting an irreversible color change at its glass-transition temperature to provide a visual indication of whether a predetermined temperature has been reached in a substance or object in heat-transfer relation to the monitoring means, and preferably also embody the use of a second cholesteric liquid crystalline phase material which exhibits a reversible color change in its mesophase temperature range when the temperature of the substance or object approaches the predetermined temperature, to give a visual warning of such approach, such materials being dispersed in respective film-forming matrices. The temperature of physiologically active substances, and other substances, is monitored.

- 1 -

## LIQUID CRYSTAL TEMPERATURE-MONITORING MEANS AND METHOD

This invention relates to a liquid crystal temperature-monitoring means and method. More particularly, the invention relates to a means and method especially adapted for providing a visual indication of whether the temperature of a physiologically active substance has risen to a predetermined limit.

Many physiologically active substances, such as blood and its components, biologicals, and blood replacements such as polymeric synthetic blood, degrade rapidly under ambient temperatures and must be stored under refrigeration prior to being used, to minimize degradation. Warming to a temperature above a level predetermined as "safe" for each substance may cause degradation sufficient to prohibit the intended use of the substance. Such warming can occur if the cooling apparatus malfunctions or after the substance is removed from refrigeration for use.

Physiologically active substances, especially blood, are used in large quantities. They are commonly refrigerated at about 2-4°C. After they are removed from regulated cold storage, as in a blood bank, they are transported to other locations for use, or possible use. The time in transit and in temporary refrigerated storage frequently extends for a number of hours, before they either are used or are returned to regulated storage. In order to safeguard against degradation of blood contained

- 2 -

in medical blood bags, handling procedures are set up, which are to be followed by hospital personnel, and a record is made of the history of the blood bags after they leave the blood bank.

There has been no means or method for continuously monitoring the temperature of blood and other physiologically active substances on a large scale, in such a manner as to record the occurrence of a temperature beyond acceptable limits and make the information known upon inspection at a later time. Consequently, a great need exists for such means and/or method, which will insure that an acceptable temperature limit has not been exceeded, though a substance be removed from reliable refrigeration for an extended period of time.

Glass thermometers have been used to monitor the temperature of refrigerated physiologically active substances. To avoid contamination, direct contact between the thermometers and the substances should be avoided. Consequently, a thermometer typically is sandwiched between containers of a substance in transit. However, the temperature indicated by the thermometer fluctuates with the temperature of the substance, and the thermometer does not preserve an indication of the highest temperature reached. Consequently, the thermometer must be observed at relatively frequent intervals in order to provide some assurance that the substance has not exceeded its predetermined safe temperature.

Special glass thermometers are available having a "memory" feature: these thermometers after first being adjusted or set will indicate the highest temperature encountered by the thermometer after its adjustment or setting. The high reading is semi-permanent, i.e., it is maintained until the thermometer is readjusted or reset. These special thermometers thus can reveal that the temperature of a monitored substance has exceeded a predetermined temperature even though the substance be re-cooled after having exceeded the predetermined temperature. However, glass thermometers of either type are expensive, the special type being the more expensive. In addition, glass thermometers are relatively susceptible to breakage, giving rise to the hazards of broken glass and, if the thermometer contains mercury, of toxic pollution.

Thermometric devices employing cholesteric liquid crystalline phase materials, referred to herein at times simply as "liquid crystals," heretofore have been employed for monitoring the temperature of stored physiologically active substances. These devices are inexpensive and not susceptible to breakage, but they do not have a memory feature. Therefore, these devices, like ordinary glass thermometers, must be observed at relatively frequent intervals, to provide assurance that the substance has not exceeded its safe temperature.

Certain cholesteric liquid crystalline phase materials can be employed in memory-type thermometric devices. These liquid crystals are of the type, disclosed in U.S. Patent No. 3,594,126, which can form a metastable ordered glass under the appropriate conditions. The liquid crystal thermometric devices can be set to give an indication of whether a predetermined temperature has been exceeded, and will maintain this indication until reset. The use of metastable ordered glass-forming liquid crystals to indicate thawing and exceeding of predetermined temperatures is disclosed in the foregoing patent and in U.S. Patent No. 4,161,557. However, so far as is known to applicants, no such composition has been provided heretofore which has solved the problem of insuring that a physiologically active substance has not exceeded an acceptable temperature limit though removed from reliable refrigeration for an extended period of time.

## Summary Of The Invention

The invention, for the first time, provides a very efficient, reliable solution to the problem of maintaining, in large-scale handling and usage, blood and other heat-sensitive physiologically active substances at acceptable temperatures, in a relatively simple and economical manner, which is easily learned by diverse individuals, who are responsible for the storage, issue, transportation, monitoring and use of such substances.

In particular, the invention provides a temperature monitoring means and corresponding method based upon the use of visually observed cholesteric liquid crystalline phase materials or liquid crystals having memory charactertistics, which means readily and rapidly may be activated for the purpose of indicating whether a predetermined temperature has been exceeded, and which may be read correctly and reliably by various individuals responsible for the condition of a substance being monitored.

- 5 -

The invention obviates the need for frequent temperature checks. The deficiencies of the prior means and methods are overcome.

In preferred embodiments of the invention, a visual warning system based upon cholesteric liquid crystal material is combined with the memory-providing system, to alert personnel to impending increase in temperature to the predetermined limit, thereby enabling steps to be taken to safeguard a substance and preserve it in a desired state.

The invention also finds use in monitoring the temperatures of substances other than those active physiologically. Of special significance in this connection is a temperature monitoring device embodying the foregoing instrumentalities, which device may be placed in heat-transfer relation to various objects.

More specifically, the invention provides temperature monitoring means for a heat-degradable physiologically active substance contained in a heat-conductive container and maintained at a holding temperature below a predetermined temperature for minimizing degradation thereof, the temperature monitoring means being adapted to be placed in heat-transfer relation to the container at such holding temperature and comprising a cholesteric liquid crystalline phase material dispersed in a film-forming polymer matrix, such material being capable of existing at a temperature below its glass-transition temperature in a characteristic metastable ordered glass form exhibiting a color normally exhibited in its mesophase temperature range, the color of the material changing, irreversibly below such

0143550

range, upon warming to its glass transition temperature, and which when the temperature monitoring means is placed in such heat-transfer relation exhibits an irreversible color change when the substance substantially reaches the predetermined temperature upon warming, thereby to provide a visual indication of whether the temperature of the substance has risen substantially to the predetermined temperature at any time after the temperature monitoring means is placed in such heat-transfer relation, with the substance at such holding temperature and the material in such characteristic form.

Reference to a physiologically active substance herein contemplates a substance employed for medical purposes, particularly such as is intended for parenteral administration to the body or for medical laboratory use. Substances with which the invention is employed in preferred embodiments include biologicals, blood components, and polymeric synthetic blood products. Biologicals are complex substances of organic origin useful in prevention, treatment and/or diagnosis of disease, such as enzymes, globulin, serum, vaccines, antitoxins, and antigens. The blood components include plasma, serum, and other fractions, and reference to blood components is intended to encompass whole blood.

The invention further provides a temperature monitoring device adapted to be placed in heat-transfer relation to an object at an initial temperature below a predetermined temperature for both visually indicating whether the object has reached the predetermined temperature at any time after placing the device

- 7 -

in such relation, and giving a visual warning when the temperature of the object approaches the predetermined temperature, which device comprises a first cholesteric liquid crystalline phase material dispersed in a film-forming matrix, such material being capable of existing at a temperature below its **glass-transition temperature in a characteristic metastable ordered glass form exhibiting a color normally exhibited in its mesophase temperature range, the color of the material changing, irreversibly below such range, upon warming to its glass transition temperature, and which when the device is placed in such heat-transfer relation exhibits an irreversible color change when the object substantially reaches the predetermined temperature upon warming, thereby to provide a visual indication of whether the temperature of the object has risen substantially to the predetermined temperature at any time after the temperature monitoring means is placed in such heat-transfer relation, with the object at such initial temperature and the material in such characteristic form; and a** second cholesteric liquid crystalline phase material dispersed in a second film-forming matrix, and which when the device is placed in such heat-transfer relation exhibits a reversible color change in its mesophase temperature range when the temperature of the object approaches the pre-determined temperature upon warming, for giving a visual warning of such approach.

### Brief Description Of The Drawings

**FIG. 1 is a plan view of a temperature monitoring device affixed to a container of a physiologically active substance, in heat-transfer relation thereto, in accordance with a pre-**

ferred embodiment of the invention;

FIG. 2 is an enlarged fragmentary cross sectional view, partly schematic, of the embodiment of FIG. 1, taken substantially on line 2-2 thereof.

FIG. 3 is an enlarged plan view of the temperature monitoring device illustrated in FIG. 1;

FIGS. 4 and 5 are enlarged schematic cross-sectional views of the device of FIG. 3, respectively taken substantially on lines 4-4 and 5-5 thereof; and

FIGS. 6-9 are plan views of components of the device, illustrated as they appear in successive stages of manufacture.

### Description Of The Preferred Embodiments

The invention provides a monitor to detect the occurrence of a temperature rise in a substance or object to some predetermined temperature, which may be a temperature at or adjacent to a limiting temperature for the substance or object. In the monitor, use is made of the ability of metastable ordered glass-forming cholesteric liquid crystalline phase materials to change colors irreversibly at temperatures at and above their transition temperatures, which temperatures may be correlated with or selected to correspond to the predetermined temperature of a substance or object.

Cholesteric liquid crystalline phase materials, also referred to as cholesteric liquid crystals, are a class of compounds that display a cholesteric mesophase or are in a cholesteric mesomorphic state within certain temperature limits. The compounds, their properties and their uses are well known, and they are described in above-identified U.S. Patent No.4,161,
557 and in the references cited therein, among others. The
liquid crystals in the cholesteric mesophase reflect light,
the dominant wave length of which is affected by stimuli
applied to the liquid crystals, such as heat, physical stress,
electricity, magnetism, and radiation, which are types of
applied energy, the presence of other materials, which may be
present as contaminants, and materials present in the environment and which act upon the liquid crystals. An important
property of the individual cholesteric liquid crsytalline
phase materials and of mixtures of different materials is
that, all other conditions being equal, they always display
the same color at a specific temperature.

The temperature sensitivity of the liquid crystals
finds important use in thermometers and thermographic systems.
In general, when viewed against a black absorptive background
color, the liquid crystals change in color from red to green
to blue to violet with increasing temperature in the mesophase temperature range, and the reverse color change takes place with decreasing temperature therein. Above and below the mesophase temperature range, the liquid crystals assume the color of the background.

Certain cholesteric liquid crystalline phase materials produce a metastable, ordered glass when fast-cooled from a first temperature in the mesophase temperature range thereof, to a second temperature below the glass-transition temperature (Tg) thereof, while retaining a color which is charactertistic of the liquid crystal when at the first temperature, and when warmed from the second temperature to a temperature substantially equal to the glass-transition temperature, or to a temperature exceeding the latter, exhibit a color change which is irreversible by cooling from the glass-transition temperature, or the higher temperature (not reaching the first temperature), to the second temperature, thereby to visually indicate the occurrence of such warming. Such materials are disclosed in above-identified U.S. Pat. No. 3,594,126. As noted in the patent, the rate of cooling from the mesophase preferably is about 10°C. per minute or higher and rapidly enough to retain a color characteristic of the material at a temperature in the mesophase temperature range.

The individual liquid crystals which function to produce the foregoing results act as viscosity-increasing agents when employed in a mixture of liquid crystalline materials, and they act to retard the rate of color change. Such agents include the dicholesteryl esters of saturated and unsaturated alpha, omega-dicarboxylic acids containing 2-27 carbon atoms and chloesteryl p-nonylphenyl carbonate, as disclosed in the foregoing patent, and other liquid crystals satisfying the above-described conditions, including cholesteryl cinnamate, cholesteryl allyl carbonate, cholesteryl benzoate, and dicholesteryl carbonate.

In preferred embodiments of the invention, the metastable ordered glass-forming liquid cyrstal composition includes either cholesteryl benzoate or dicholesteryl carbonate, and preferably both, for maximizing the length of time the composition will remain in the ordered glass state, as referred to hereinafter. It is further preferred that the composition additionally include cholesteryl p-nonylphenyl carbonate. Still further preferred compositions include, in addition to the foregoing components, cholesteryl nonanoate.

A liquid crystal composition is placed in its ordered glass form by first warming it to a temperature at which it displays a color typical of its mesophase temperature range, which temperature may be any temperature in the range. The liquid crystal then is rapidly cooled to a temperature below its glass-transition temperature, thereby forming a metastable ordered glass exhibiting the color corresponding to the mesophase temperature at which rapid cooling commenced. It is preferred to warm the liquid crystal composition first to a temperature 0.5-5°C, more preferably 1-2°C, higher than the highest temperature of the mesophase range of the composition, and, allowing the composition to cool, to initiate the rapid cooling as the color of the composition just changes to the desired color preferably from black to violet or blue, with falling temperature.

The length of time the composition will remain in its ordered glass state depends upon its temperature, being inversely related thereto. Eventually, the composition will commence to change color spontaneously, and finally revert to its amorphous state and exhibit the color of its background, although maintained below its glass-transition temperature. The composition no longer is useful for monitoring purposes once it commences to change color in this manner.

The conditions under which the temperature of a substance or object is monitored are but difficultly if at all subject to exact analysis. Therefore, the selection of a liquid crystal composition suitable for recording the attainment of a predetermined temperature in the substance or object preferably is performed empirically or operationally. Thus, in a preferred procedure, liquid crystal compositions are selected, on the basis of information in the literature or obtained from experimentation, which have transition temperatures from their ordered glass state approximating the predetermined temperature. These liquid crystal compositions are applied to a container for the substance or to another object, in the form of devices or tags, to determine empirically the liquid crystal composition or compositions which undergoes or undergo a color change when the substance or object reaches the predetermined temperature. The specific color change to be used as an indicator of the predetermined temperature is selected in accordance with observed results.

In a preferred screening procedure for experimentally determining transition temperatures of ordered glass-forming liquid crystal compositions, used when the temperatures are above 0°C, a test tag containing a composition in its mesophase is affixed to an aluminum platform. The platform is immersed in a bath containing a circulating coolant consisting of equal volumes of water and isopropanol, at 0°C. In this manner, the composition is rapidly cooled to a temperature below its glass-transition temperature and placed in its ordered glass state. The coolant is warmed at a rate of 0.2°C per minute, while the temperature of the surface of the block is measured by a thermistor probe in contact therewith. The block temperatures measured and the colors exhibited by the composition at 60-second intervals are recorded. As the coolant is warmed, the color of the composition changes from its original color at some point. Preferably, the original color is blue against a black background, obtained by fast-cooling the composition from its mesophase while exhibiting that color. Continued warming causes the composition to go through a succession of color changes, over a range of temperatures, until the composition exhibits the background color, which is black. The temperature range of the color change, determined in this manner, serves as an indication of the temperatures of a substance or object which will produce a color change in the composition.

Liquid crystal compositions of interest for the intended use, on the basis of the screening test, are further evaluated by employing them in a temperature monitoring device, such as made in accordance with the present invention, under conditions approximating or simulating those found in use. Thus, for example, when the intended use is for monitoring blood temperatures, a Fenwal "Blood-Pack"-type blood bag, exposed to room temperature, which may be about 24-27°C, is connected to a source of circulating cold water. A thermistor probe is centered inside the bag, for measuring the core temperature of its contents. Another probe is attached to and measures the temperature of the outer surface of the bag. Cold water is circulated through the bag until its contents stabilize at a core temperature of 2°C.

The monitoring device with the liquid crystal composition in its mesophase then is affixed to the outer surface of the bag, causing the liquid crystal composition to be rapidly cooled to its ordered glass state. The circulation of water then is discontinued, and the inlet and outlet ports of the bag are closed off. The bag is allowed to warm to the ambient room temperature. The approximate time of warming to a core temperature of about 10°C is 20-30 minutes at an ambient temperature of about 26.5°C. The core temperature, the bag surface temperature, and the color of the liquid crystal composition are observed at one-minute intervals and recorded. The color of the composition at a predetermined core temperature serves as the first signal that such temperature has been reached or exceeded.

Succeeding colors, the last of which is black, signal higher temperatures.

Compositions contemplated for use are.tested for retention of their ordered glass state, by storage at approximate temperatures after being placed in that state. Compositions for use in monitoring blood bag temperatures are stored at 2°C in testing. It is desirable that the initial color be maintained for up to about 24 hours, which is related to the period of time for which the bags may be out of the blood bank prior to use. Compositions being tested for other uses may be stored at other temperatures.

Preferred liquid crystal compositions which may be employed in accordance with the invention to indicate that a predetermined temperature has been reached are set forth in Table I, together with their mesophase temperature ranges, experimentally-determined transition temperatures, and relaxation times at 2°C. The transition temperatures are the temperatures at which the specified color changes take place, as determined by the above-described screening test. The relaxation time relates to the time period over which a composition remains in its ordered glass state. The relatively short relaxation times of composition numbers 1 to 5 at 2°C limit their utility to lower temperature use, in general.

### TABLE 1

| Composition No. | [1]Cholesteric Liquid Crystal Composition, Parts By Weight | | | | | | Mesophase Temp. Range, °C |
|---|---|---|---|---|---|---|---|
| | CNPC | OCC | CN | CBZ | CCL | DCC | |
| 1 | 40.0 | - | 40.0 | 10.0 | 10.0 | - | 35.4-37.2 |
| 2 | 40.0 | - | 46.0 | 7.0 | 7.0 | - | 35.2-36.7 |
| 3 | 30.0 | - | 46.8 | 17.4 | 5.8 | - | 36.0-38.8 |
| 4 | 30.0 | - | 45.0 | - | 10.0 | 15.0 | 21.8-26.1 |
| 5 | 34.0 | 8.0 | 42.0 | 8.0 | 8.0 | - | 25.4-28.9 |
| 6 | 28.9 | - | 36.8 | 15.1 | - | 19.2 | 26.7-32.5 |
| 7 | 35.0 | - | 37.0 | 13.0 | - | 15.0 | 34.7-37.1 |

### TABLE 1 (cont'd)

| Composition No. | Preferred Initial Warming Temperature °C | Transition Temp., °C, At Start Of: | | | [4]Relaxation Time at 2°C, Hours |
|---|---|---|---|---|---|
| | | [2]1st Color Change | [3]Signal Color | Black | |
| 1 | 38.5 | 3.2 | - | 9.8 | 1.0 |
| 2 | 38.0 | 0.8 | - | 8.6 | 0.5 |
| 3 | 40.0 | 1.2 | - | 8.2 | 0.25 |
| 4 | 27.5 | 4.8 | - | 15.5 | 5.5 |
| 5 | 30.0 | 1 | - | 8.4 | 1.0 |
| 6 | 34.0 | 7.4 | 13.0 (GREY) | 23.7 | 96.0 |
| 7 | 36.5 | 5.5 | - | 18.3 | 28.0 |

[1]The abbreviations used are: CNPC= cholesteryl p-nonylphenyl carbonate, OCC= cholesteryl oleyl carbonate, CN= cholesteryl nonanoate, CBZ= cholesteryl benzoate, CCL= cholesteryl chloride, DCC= dicholesteryl carbonate.

[2]Light blue in each instance.

[3]Color selected to indicate that a predetermined temperature has been exceeded.

[4]Time to first appearance of black color

- 17 -

In further preferred embodiments of the invention, a second cholesteric liquid crystalline phase material is provided in association with the ordered glass-forming liquid crystalline phase material, to give a visual warning when the temperature being monitored approaches the predetermined temperature. The second liquid crystal material exhibits a reversible color change in its mesophase temperature range when the temperature being monitored approaches the predetermined temperature. Thus, when the second material exhibits a color characteristic of its mesophase temperature range, an observer is warned that the temperature is approaching the predetermined temperature, and may take steps to ensure that the latter temperature is not reached. It is preferred that the two materials be relatively closely adjacent to each other, for determining the temperature in the same area, and so that both materials may be viewed at a glance. Additional cholesteric liquid crystalline phase materials, having other mesophase temperature ranges, may be provided for indicating other temperatures below the predetermined limit temperature.

Table 2 sets forth three preferred liquid crystal compositions suitable for use in monitoring the temperature of blood contained in a blood bag, over the core temperature range of 1-9°C.

TABLE 2

| Composition No. | Cholesteric Liquid Crystal Composition, Parts By Weight | | | Temperature, °C, At Start Of: | | |
|---|---|---|---|---|---|---|
| | CN | OCC | CCL | Red Color | Green Color | Blue Color |
| 1 | 37.8 | 50.2 | 12.0 | 4.2 | 5.1 | 6.1 |
| 2 | 48.7 | 40.1 | 11.2 | 6.7 | 7.6 | 8.9 |
| 3 | 55.4 | 33.4 | 11.2 | 10.1 | 11.1 | 12.3 |

[1]The abbreviations used are: OCC= cholesteryl oleyl carbonate, CN= cholesteryl nonanoate, CCL= cholesteryl chloride.

The compositions of Table 2, like the ordered glass-forming liquid crystals, are placed in heat-transfer relationship to the outer surface of a blood bag. The mesophase color play temperature ranges of compositions 1, 2 and 3 were empirically selected to indicate bag content core temperatures in the respective ranges of 1-3°C, 4-6°C and 7-9°C. The determination of the appropriate liquid crystal mesophase ranges is carried out by a simulated blood bag use test, similar to that described hereinabove. Other compositions may be selected for indicating the same or different temperatures or temperature ranges. Different mesophase temperatures may be selected for other uses embodying other predetermined temperatures.

Liquid crystals must be protected or shielded from the atmosphere, unless they are used only for a relatively short period of time. Exposure to the atmosphere results in oxidation, causing the liquid crystals to deteriorate. Foreign particles from the atmosphere provide sites for crystalliaation and alter the delicately balanced mesomorphic state of the liquid crystals.

Ultraviolet radiation may cause deterioration of the liquid crystals.

For protection against such exposure, protection against physical contacts, cleanliness, convenience in handling, and other reasons, liquid crystals in the past have been enclosed in various ways. In the present invention,

the liquid crystals are dispersed in a film-forming polymer matrix. It is preferred that they be microencapsulated, and that the capsules be dispersed in the matrix. Thus, encapsulation has been found to increase the time period over which a liquid crystal composition will retain its ordered glass state, in certain instances. Encapsulation materials include gelatin-gum arabic, polyvinyl alcohol, zein, or other substances, which are dispersed in film-forming polymers, as disclosed in U.S. Pat. Nos. 3,585,381 and 3,697,297. A mixture of pigskin gelatin and gum arabic is the preferred capsule material, and the capsules preferably are dispersed in a matrix of polyvinyl alcohol.

Alternatively, the liquid crystals may be dispersed in the matrix in the form of finely divided naked aggregates. The dispersion may be produced by drying an emulsion of the liquid crystals in an aqueous solution of a polymer such as polyvinyl alcohol or a polyacrylate, as disclosed in British Patent No. 1,161,039, published Aug. 13, 1969, and U.S. Pat. No. 3,600,060, or by forming an organic solvent solution of a polymer and the liquid crystals, and removing the solvent to form a film or layer, suitable polymers including polyvinyl butyral, acrylic resin, styrene resins, polyester resins, epoxy resins, polyvinyl chloride, polyvinyl acetate, and polycarbonate, as disclosed in U.S. Pat. No. 3,620,889, and polyurethane, as disclosed in U.S. Pat. No. 3,872,050. The aforementioned U.S. Pat. No. 4,161,557 discloses an improvement in the manufacture of a polyvinyl butyral film having liquid crystals dispersed therein.

A temperature monitoring device in accordance with the invention preferably includes a support or base, which carries the liquid crystal compositions in a permanent assembly. The support is affixed to an object the temperature of which is to be monitored. The support preferably is a film or strip of plastic material, further preferably polyethylene terephthalate (Mylar), which also serves as a protective layer for the liquid crystals. It is further preferred to provide means, such as an adhesive, for securing the liquid crystal compositions to the object.

More specifically, a preferred monitoring device has substantially flat inner and outer surfaces, and includes a self-supporting clear, transparent supportive and protective outer film carrying the first and second liquid crystal compositions on its inner surface, and an inner layer of adhesive serving to place the device in intimate heat-conductive relation to an object.

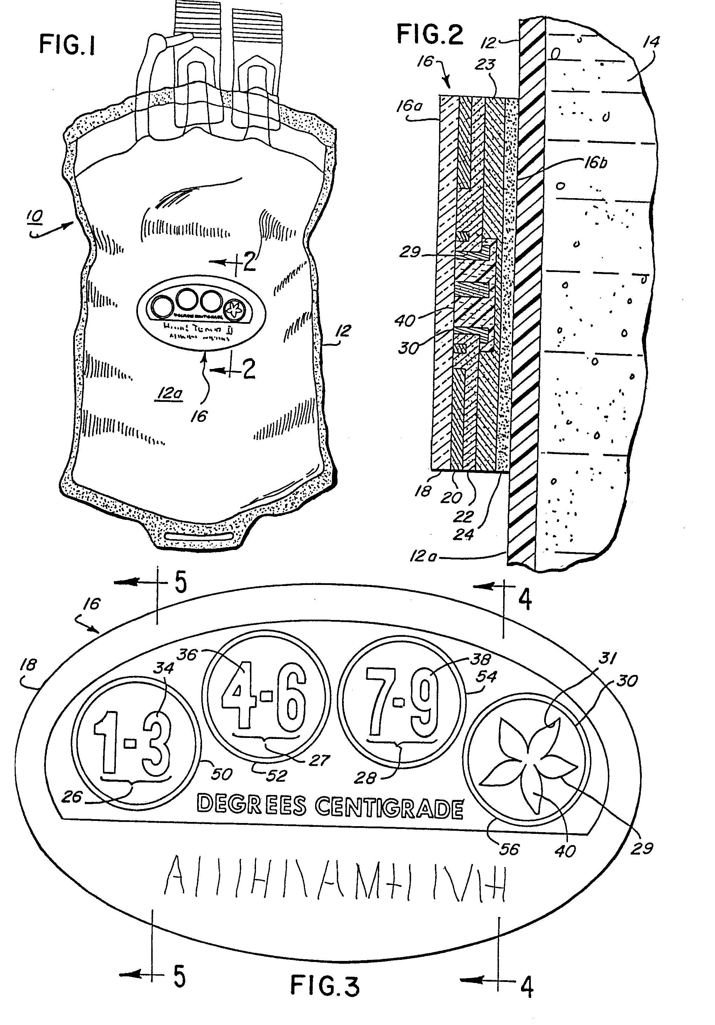

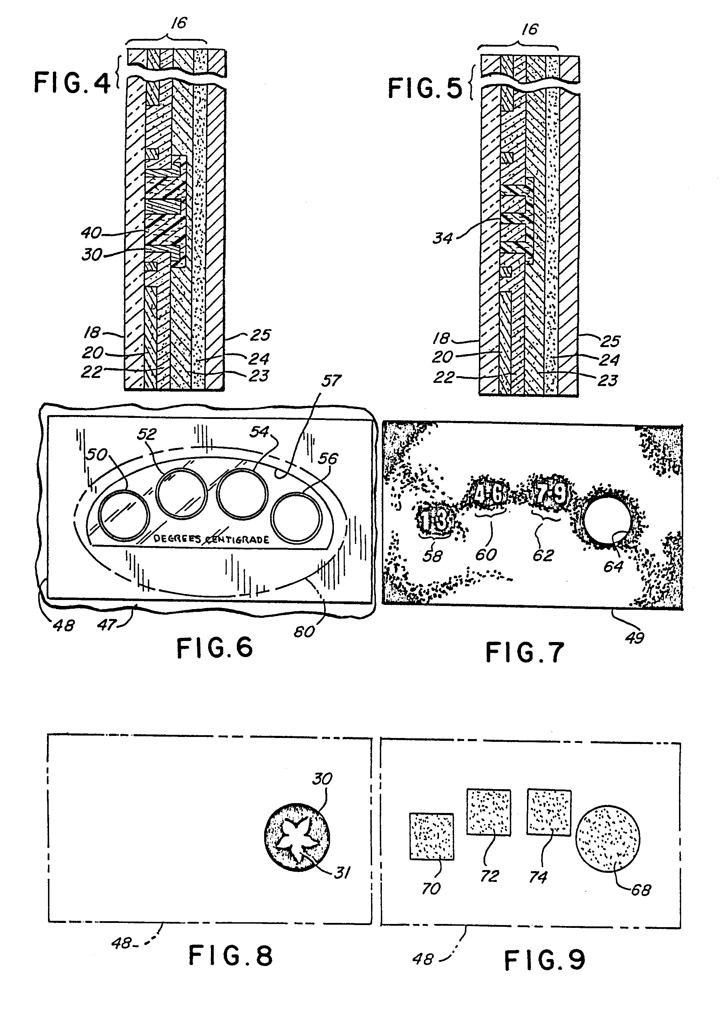

FIGS. 1 and 2 illustrate a combination 10 of a container 12 and a physiologically active substance 12, in accordance with a preferred embodiment of the invention. The container 12 constitutes a conventional medical blood bag, holding whole human blood as the substance 14 maintained at a core temperature of from about 1°C to a desired maximum below about 10°C .A temperature monitoring device 16 of the invention in the form of a tag or label is adhered to the outer surface 12a of the bag 12, in intimate heat-conductive relation thereto. The device 16 has substantially flat outer and inner surfaces 16a and 16b, respectively. It includes a self-supporting clear transparent outer film or layer 18 preferably of polyethylene terephthalate (Mylar), about 3 mils thick. A graphic layer 20 of white ink overlies the inner surface of the film 18. A graphic layer 22 of blue or blue-violet ink overlies the inner surface of the white ink layer 20. A background layer 23 of black ink overlies the inner surface of the blue layer 22. A layer 24 of pressure-sensitive adhesive overlies the inner surface of the black layer 23. The adhesive layer 24 adheres the device 16 to the outer surface 12a of the bag 12. Prior to use, a release sheet 25 (FIGS. 4 and 5) is adhered to the adhesive layer 24 thereover.

Referring particularly to FIG. 3, registering windows or openings are provided in the white layer 20 and blue layer 22, to define four viewing areas 26, 27, 28 and 29. The respective viewing areas 26, 27, and 28 are in the shape of the numerical indicia 1-3, 4-6, and 7-9. The viewing area 29 encloses a central portion of a second layer 30 of black ink, which also overlies the blue layer 22 around the area 29. A centrally-disposed flower- or star-shaped window or opening 31 is provided in the second black ink layer 30.

Reversible temperature indicators 34, 36, and 38 are provided in the viewing areas 26, 27, and 28, respectively. The reversible indicators 34, 36, and 38 are composed of liquid crystal compositions Nos. 1, 2, and 3, respectively, of Table 2, each dispersed in a film-forming polymer matrix, as described hereinafter. An irreversible temperature indicator 40 is provided in the viewing area 29, and it is composed of liquid crystal composition No. 6 of Table I, dispersed in a film-forming matrix. The indicators 34, 36, 38, and 40 are visible through the transparent film 18, and the black ink layer 23 provides a black background for them. The second black ink layer 30 also surrounds a visible portion of the irreversible indicator 40, in the flower-shaped window 31. The reversible indicators 34, 36, and 38 serve to indicate current temperatures, while the irreversible indicator 40 serves to indicate that a predetermined temperature has been reached, either in the past or currently.

The inks used to manufacture the device 16 are selected for their inertness to or non-interaction with the liquid crystal compositions of the indicators 34, 36, 38, and 40, for being printable upon the film 18, and, with the blue and black inks, for enhancing the color display of the indicators. In particular, liquid crystals are adversely affected by aromatic solvents, and by lower molecular weight compounds containing, among other functional groups, ketone, halogen, carboxylic acid, or basic amine groups, or conjugated unsaturation, which, therefore, are avoided.

An ink is evaluated for possible use in the device 16 by making a test piece by the procedure described herein for the manufacture of the device. The mesophase temperature range and color display characteristics for the reversible and the irreversible indicators, and the ordered glass characteristics of the irreversible indicator, are observed. If any of these characteristics vary from standard values, the ink is rejected.

Printability, or adherence, to the film 18 is tested by determining whether the ink layer is lifted from the film surface by a pressure-sensitive tape adhered to the ink layer and peeled therefrom. The color of a blue ink is visually selected to minimize contrast with the violet end of a liquid crystal color display. A black ink is visually selected to be opaque and highly light absorbent.

In use, the release sheet 24 is removed, and the device 16 is warmed to a temperature above the mesophase temperature range of the liquid crystal composition in the irreversible temperature indicator 40,which is Composition No. 6 of Table I in the illustrative embodiment, having a preferred warming temperature of 34°C. The device 16 may be warmed by means such as immersion in heated water, or exposure to heated air from a hot air blower. The indicator 40 goes through its mesophase color display to a black color.

- 24 -

The device 16 then is brought into proximity to a blood bag which contains blood at its storage temperature. The color of the irreversible indicator 40 is observed, and when it changes from black to violet, as the liquid crystal composition cools into its mesophase, the device 16 is firmly pressed against the bag 12, to affix it to the bag. The device 16, and particularly the irreversible indicator 40, is rapidly cooled by heat transfer to the cold bag, thereby placing the liquid crystal composition of the indicator 40 in a metastable ordered glass state. The color of the ordered glass is blue, due to a slight cooling of the indicator 40 occurring just prior to the formation of the ordered glass state by the rapid cooling.

The reversible indicators 34, 36, and 38, provide visual indications of the temperature of the blood 14 when the temperature is in the range of 1-3°C, 4-6°C, and 7-9°C, respectively. With the blood at a storage temperature of 2°C, the indicator 34 for the range 1-3°C will display a color, indicating that the blood temperature is in that range, as described more specifically hereinafter.

Typically, the temperature monitoring device 16 is applied to the bag 12 when the bag is removed, or it is anticipated that the bag is to be removed from the blood bank refrigerator. Such removal occurs when blood is to be transported from a blood bank to an operating room, or from one blood bank to another, and it may occur when samples of blood are required

0143550

- 25 -

for cross-matching to the blood of a patient. The blood may be removed from the blood bank and in transit or temporarily stored in a refrigerator near the operating room for up to a number of hours, approaching 24 hours.

During the time the bag 12 is removed from the blood bank, the blood temperature may be checked by observing the reversible indicators 34, 36, and 38. The indicator 38, having a temperature range of 7-9°C, indicates that the temperature of the blood is approaching the predetermined temperature of 10°C, to warn an observer, who may take steps to prevent the temperature thereof from reaching 10°C. With respect to each of the temperature ranges indicated by the reversible indicators 34, 36, and 38, displays of tan, green, and blue colors indicate temperatures at the lower end, middle, and higher end of the range, respectively.

A change in color of the irreversible indicator 40 from its ordered glass color of blue to a color of grey indicates that the blood 14 in the bag 12 has reached a temperature of substantially 10°C. As the blood warms further, the color of the indicator 40 goes through a succession of shades, finally becoming black. The color change of the indicator 40 is irreversible, in the sense that the blue color of the ordered glass form thereof cannot be regained merely by re-cooling the bag 12 with the adhered device 16 to a temperature below 10°C. Thus, the device 16 evidences excessive warming followed by recooling of a blood bag when the irreversible indicator 40 has changed color, while the reversible indicators 34, 36, and 38 indicate that the temperature of the blood is in the range of 1-9°C.

The device 16 thus serves to monitor the blood temperature when the blood is susceptible to otherwise unknown amounts of warming. It both records the occurrence of warming to a predetermined temperature, and, by indicating approaching temperatures, warns that such a warming may be imminent, as well as indicating other current temperatures. The presence of the device provides assurance that the blood may be used, or may be returned to the blood bank.

It will be understood that, under conditions of warming a cold blood bag, the temperature of the indicator 40 differs from the core temperature of the blood in the bag, due to the temperature gradient existing under the nonequilibrium conditions that exist. Composition number 6 of Table I, used in the indicator 40, changes from an ordered glass color of blue to a color of grey at a core temperature of substantially 10°C. Table 3 sets forth data obtained when testing the indicator 40 in a simulated blood-bag-use test as described hereinabove.

TABLE 3

| Core Temperature, °C | Bag Surface Temperature, °C | Color Of Indicator |
|---|---|---|
| 6.8 | 10.8 | First appearance of LIGHT BLUE |
| 9.9 | 13.1 | First appearance of GREY |
| 11.9 | 14.7 | Last appearance of GREY |
| 12.2 | 14.9 | First appearance of BROWN |
| 15.6 | 17.6 | Last appearance of BROWN |
| 16.3 | 18.2 | BLACK |

Due to the relaxation effect described hereinabove, the blue color of the ordered glass form of the liquid crystal composition of the irreversible indicator 40 ultimately will spontaneously change as the composition reverts to the amorphous form, even though the temperature thereof be maintained below its glass-transition temperature. Thus, an indicator 40, employing the liquid crystal composition number 6 of Table I, was found to change in color from blue to grey after storage for 24 hours under simulated blood bag refrigeration conditions encountered in practice, wherein a blood bag having a device 16 adhered thereto was stored in a refrigerator set at 2°C, and the door of the refrigerator was repeatedly opened and closed. Therefore, use under such conditions is limited to less than 24 hours.

The following examples illustrate preferred embodiments of the invention. It is to be understood that the invention is not limited to the materials, proportions, conditions, and procedures thereof, which are merely illustrative.

## EXAMPLE I

A liquid crystal composition capable of forming a metastable ordered glass is prepared in the following manner. Cholesteryl p-nonylphenyl carbonate (CNPC), 2.89 grams, and chlolesteryl nonanoate, 3.68 grams, are added to a glass reaction vessel fitted with a stirrer and heat source. The beaker contents are heated to 90°C while stirring. Care is taken to insure that the temperature of the mixture does not exceed 92°C at any time, since CNPC discolors at temperatures higher than 92°C, and the color behavior, both in the mesophase and ordered glass form, is adversely affected. Cholesteryl benzoate, 1.51 grams, and dicholesteryl carbonate, 1.92 grams, are added to the heated mixture and heating and mixing are continued as before until a uniform melt is obtained.

EXAMPLE 2

The composition of Example 1 is encapsulated by the following procedure. Fifty grams of a 20% (w/w) aqueous solution of pigskin gelatin having a Bloom strength of 275-305 grams and an isoelectric point of pH 8-9, and 50 grams of a 20% (w/w) aqueous solution of gum arabic are stirred with 50 grams of distilled water at about 70°C in a Waring Blendor. To this solution 100 grams of the liquid crystal composition of Example 1 at a temperature of about 90°C is added, and stirring is continued until the emulsified liquid crystal mixture has an average droplet size of 20-50 microns. While the mixture is continuously stirred at a moderate rate, an additional 580 grams of warm (70°C) distilled water is added. The pH of the mixture is adjusted to approximately 4-5 by the dropwise addition of a buffer solution containing 11.4 parts by weight of a 20% (w/w) sodium hydroxide solution and 88.6 parts by weight of 14.7% (w/w) aqueous acetic acid.

The liquid system is first cooled slowly to room temperature and then chilled in an ice bath to below 10°C, while the mixing is continued, and 5.0 milliliters of 25% (w/w) aqueous glutaraldehyde is added. The system is allowed to stir for approximately 12·hours while slowly returning to room temperature. At the end of that time, water is removed from the suspension by filtration through a Whatman #2V, or similar paper until a concentration of approximately 28% (w/w) solids is obtained. The concentrate then is passed through a 150 micrometer sieve to remove particles larger than about 150 micrometers.

After sieving, approximately 30% by weight of a 10% (w/w) aqueous solution of polyvinyl alcohol is added to the encapsulated liquid crystal slurry. The microcapsules are dispersed in the polyvinyl alcohol, which serves as a film-forming polymer matrix therefore. The pH of the slurry containing polyvinyl alcohol is finally adjusted to about 6.0 by the dropwise addition of 20% (w/w) aqueous sodium hydroxide.

## EXAMPLE 3

The reversible liquid crystal compositions 1, 2 and 3 of Table 2 are prepared by mixing the components at 90°C, as described in Example 1. Each formulation is microencapsulated as described in Example 2, with the exception that the temperature of the water initially in the Waring Blendor and later added thereto is at about 55°C rather than at about 70°C.

## EXAMPLE 4

. A device 16 is manufactured by the following procedure. Individual steps of the procedure are illustrated in FIGS. 6-8. The ink layers 20, 22, 23, and 30 and the liquid crystal composition indicators 34, 36, 38, and 40 are printed or deposited on the rear surface of a large Mylar base sheet 47 (FIG. 6), in the manufacture of a plurality of devices in each sequence of operations. FIGS. 6-8 depict the graphic appearances and the relative orientations of the several layers and printings, as viewed through the front surface of the sheet 47.

The device 16 is manufactured by a screen printing process, so that the inks used therefor preferably are of the screen printing type. They are selected for inertness, adherence, and color quality, as described above. Commercial inks found acceptable for use in the device 16 include a series of alkyd-type inks made by the Naz-Dar Company, Chicago, Illinois. These inks contain an effective amount of lead naphthanate drier and employ an aliphatic solvent as the thinner. The white Naz-Dar ink is a flat white enamel, and the blue and black inks are gloss enamels.

Referring to FIG. 6, white ink, such as Naz-Dar 59-192, is screen-printed through a 280-mesh graphic screen on the inner or rear surface of the base sheet 47 to form the white ink layer 20 having the graphic appearance illustrated, and a rectangular border 48. The ink is dried for 24 hours at 20-27°C. Closely spaced circular rings 50, 52, 54, and 56 of white ink are arranged in a curved row in an elongate opening 57 in the layer 20, and they define windows in which the respective viewing areas 26, 27, 28 and 29 (FIG. 3) are provided.

After the white ink layer 20 has dried, blue ink, such as Naz-Dar Royal Blue 59-157, is screen-printed through a 330-mesh screen on the inner surface of the white ink layer 20 and dried for 24 hours at 20-27°C, to form the blue ink layer 22. The blue ink layer 22 has the graphic appearance illustrated in FIG. 7. A rectangular border 49 of the layer 22 is congruent with the border 48 of the layer 20.

Openings 58, 60, 62 and 64 provided in the blue ink layer 22 define, successively, the respective numerical indicia "1-3", "4-6", and "7-9", and a circular space. The three indicia openings 58, 60, and 62 register with respective successive rings 50, 52, 54 of the white layer 20, centrally thereof. The remaining circular opening 64 is in registry with the remaining ring 56 of the layer 20, at one end of the row of rings. The blue ink layer 22 fills the opening 57 in the white ink layer 20, except where the openings exist in the blue ink layer, and the blue ink is deposited on the inner surface of the base sheet 47 in the opening 57.

Referring to FIG. 8, after the blue ink layer has been dried, black ink, such as Naz-Dar Black 59-111, is screen-printed, using a 260-mesh screen, on the inner surface of the blue layer 22, in registry with the circular opening 64, to form the black ink layer 30. The ink is dried for 24 hours at 20-27°C. The orientation of the black ink layer 30 with respect to the white and blue ink layers 20 and 22 is indicated by the positioning of the former layer 30 with respect to the border 48 of the white ink layer 20, illustrated by phantom lines. The central portion of the black ink layer 30 is received within the end ring 56 and on the inner surface of the base sheet 47. The black ink layer 30 has provided centrally therein the flower-, or star-shaped window 31.

The black layer 30 provides a contrasting surrounding color for the preferably blue color of the ordered glass state of the irreversible indicator 40, and for the grey color indicating that the predetermined temperature has been reached. The occurrence of a black color of the indicator 40 and the resulting completely black area within the end ring 56 indicates that the predetermined temperature has been substantially exceeded.

After drying of the black ink layer 30, the microencapsulated ordered glass-forming liquid crystal slurry of Example 2 is screen-printed through a 40 mesh screen on the inner surface of such layer and within its flower-shaped opening 31. After a drying period of a minimum of 2 hours at 20-27°C, the drying schedule used for all printings of liquid crystal slurries, a second such printing is made of the slurry of Example 2, to provide the irreversible indicator 40. The double thickness coating enhances perception of the irreversible color change of the liquid crystals. The coating is illustrated in FIG. 9 as the circular layer 68, oriented with respect to the white ink layer border 48 as shown.

After drying of the second printing of the microcapsules of Example 2, the slurries made according to Example 3 and containing the reversible liquid crystal compositions 1, 2, and 3 of Table 2 are screen-printed through a 40-mesh screen on the inner surface of the blue ink layer 22, with drying between printings. The slurries are printed in sequence, in respective viewing areas 26, 27, and 28, to provide respective reversible indicators 34, 36, and 38. The printings are illustrated in FIG. 9 as the respective square layers 70, 72, and 74, oriented with respect to the white ink layer border 48 as shown.

When the last slurry printing has dried, black ink, such as Naz-Dar Black 59-111, is printed through an 83-mesh screen to form the background layer 23, which overlies the exposed inner surfaces of all graphics and liquid crystal layers. After drying the black ink layer 23, the layer 24 of pressure-sensitive adhesive is applied, or laminated to, the inner surface of the layer 23. The application of the adhesive layer 24 and the release sheet 25 overlying the inner surface thereof is conveniently done by use of conventional adhesive-bearing sheets, such as No. 815 sheets supplied by the Fasson Industrial division of Avery International. These sheets have a layer of adhesive sandwiched between two release sheets, one of which is removed and the exposed surface of the adhesive layer laminated to the inner surface of the black ink layer 23. Alternatively, the adhesive layer 24 and the release sheet 25 may be provided in a manner such as disclosed in U.S. Patent No. 4,310,577.

The resulting laminated assembly then is die-cut into multiple devices 16, by cutting oval units from the assembly, each in the outline represented by the broken line 80 in FIG. 6. The oval sections of the base sheet 47 become the outer supportive and protective films 18 of the devices 16.

EXAMPLE 5

Each of liquid crystal composition No. 6 of Table 1 and compositions Nos. 1, 2 and 3 of Table 2 is compounded as described in Example 1, and dispersed in the form of finely divided naked aggregates in a polyvinyl butyral (PVB) matrix for use as a temperature monitoring means, by the following method according to U.S. Patent No. 4,161,557:

Ten grams of a liquid crystal composition and 13.3 ml. of toluene are added to a vessel and stirred at room temperature until homogeneous. To another vessel is added 1.9 gm. of Pycal-94 (ICI Americas), a polyoxyethylene aryl ether surface active plasticizer; 1.9 gm. of Paraplex RGA-8 (Rohm & Haas), an oil-modified azaleic acid plasticizing resin; and 18.1 gm. of isopropanol. The foregoing mixture is stirred at room temperature until the components are evenly dispersed, and 4 gm. of Butvar B-72 (Monsanto Polymers and Petrochemicals), a polyvinyl butyral resin having an average molecular weight of 180,00-270,000, and 13.3 ml. of toluene are added to the mixture. Stirring at room temperature is continued until a homogeneous solution is obtained.

- 35 -

The toluene solution of liquid crystals is added to the polyvinyl butyral-containing solution, and the resulting solution is stirred at room temperature until it is homogeneous. The resulting solution is then deaerated by letting stand 1-2 hours at room temperature. The solution may be cast on a suitable surface, followed by evaporation of solvent, to provide a thin film of the polymer having the crystals dispersed throughout.

### EXAMPLE 6

A temperature monitoring device of the invention is prepared by the method of Example 4, substituting the naked liquid crystal PVB-containing solutions of composition No. 6 of Table 1 and compositions Nos. 1, 2, and 3 of Table 3 for the slurries containing the respective compositions, and applying the solutions by knife coating at a 10 mil wet film thickness, rather than by screen printing.

Composition Nos. 1-5 and 7 of Table 1 may be compounded employing the procedure of Example 1, and either encapsulated and the capsules dispersed in a matrix, employing the procedure of Example 2, or dispersed as discrete naked liquid crystal aggregates in a matrix, employing the procedure of Example 5, to provide an irreversible temperature monitoring means. The monitoring means may serve to monitor lower predetermined temperatures, and composition Nos. 4 and 7 also may serve to monitor predetermined temperatures of an order of magnitude similar to the monitoring which may be accomplished with composition No. 6.

Depending upon the predetermined temperature being monitored, one or more of the reversible compositions Nos. 1-3 of Table 2 may be employed in combination with the compositions of Table 1, to monitor temperatures approaching the predetermined temperature and provide warning signals when the approaching temperatures are reached. Also, various other reversible compositions may be compounded for color display at appropriate approaching temperatures, following the teachings of the prior art, exemplified by the above-identified patents. Likewise, other irreversible and reversible liquid crystal compositions may be compounded following such teachings, for use in monitoring temperatures of the same or different order of magnitude.

Among other physiologically active substances with which the invention may be employed, immunizing biologicals are thermolabile, and are stored at reduced temperatures, generally about 2-8°C, to maintain full potency. Many enzymes are thermolabile and must be stored at reduced temperatures in order to maintain full potency. Polymeric synthetic blood, such as Fluosol, must be stored at temperatures not exceeding minus 5°C, in order to prevent potentially dangerous particle

0143550

- 37 -

size increase. The invention imparts an added dimension to the safeguarding of health by control of medically used

substances.

0143550

- 38 -

<u>CLAIMS</u>

1. Temperature monitoring means for a heat-degradable physiologically active substance contained in a heat-conductive container and maintained at a holding temperature below a pre-determined temperature for minimizing degradation thereof, said temperature monitoring means being adapted to be placed in heat-transfer relation to said container at said holding temperature and comprising a cholesteric liquid crystalline phase material dispersed in a film-forming polymer matrix, said material being capable of existing at a temperature below its glass-transition temperature in a characteristic metastable ordered glass form exhibiting a color normally exhibited in its mesophase temperature range, the color of the material changing, irreversibly below such range, upon warming to its glass transition temperature, and when the temperature monitoring means is placed in said heat-transfer relation said material exhibiting an irreversible color change when said substance substantially reaches said predetermined temperature upon warming, thereby to provide a visual indication of whether the temperature of the substance has risen substantially to said predetermined temperature at any time after the temperature monitoring means is placed in said heat-transfer relation, with the substance at said holding temperature and the material in said characteristic form.

2. Temperature monitoring means as defined in claim 1 wherein said substance comprises a biological, a blood component, or a polymeric synthetic blood product.

3. Temperature monitoring means as defined in claim 1 wherein said substance comprises a blood component and said container is a medical blood bag.

4. Temperature monitoring means as defined in claim 3 wherein said predetermined temperature is about 10°C.

5. Temperature monitoring means as defined in claim 1 wherein said material is microencapsulated, and the capsules are dispersed in said matrix.

6. Temperature monitoring means as defined in claim 5 wherein said capsules are formed of gelatin-gum arabic, and said polymer is polyvinyl alcohol.

7. Temperature monitoring means as defined in claim 1 wherein said material is dispersed in said matrix in the form of finely divided naked aggregates.

- 40 -

8.  Temperature monitoring means as defined in claim 7 wherein said polymer is polyvinyl butyral, polyurethane, or an acrylic resin.


9.  Temperature monitoring means as defined in claim 1 wherein said material includes at least one member selected from the group consisting of cholesteryl benzoate and dicholesteryl carbonate.


10.  Temperature monitoring means as defined in claim 9 wherein said material also includes cholesteryl p-nonylphenyl carbonate.


11.  Temperature monitoring means as defined in claim 10 wherein said material further includes cholesteryl nonanoate.


12.  Temperature monitoring means as defined in claim 1 wherein said material includes, in approximate percentages by weight, 28.9% cholesteryl p-nonylphenyl carbonate, 36.8% cholesteryl nonanoate, 15.1% cholesteryl benzoate, and 19.2% dicholesteryl carbonate.

- 41 -

13. Temperature monitoring means as defined in claim 1 and further comprising a second cholesteric liquid crystalline phase material dispersed in a second film-forming polymer matrix, said second material when the temperature monitoring means is placed in said heat-transfer relation exhibiting a reversible color change in its mesophase temperature range when the temperature of said substance approaches said predetermined temperature upon warming, to give a visual warning of such appraoch.

14. Temperature monitoring means as defined in claim 13 wherein said substance comprises a blood component, said predetermined temperature is about 10°C, and said second material exhibits said color change when the temperature of said substance is in a range of about 7°C to 9°C.

15. Temperature monitoring means as defined in claim 13 wherein each of said first and second materials is microencapsulated, and the capsules containing the materials are dispersed in their respective matrices.

16. Temperature monitoring means as defined in claim 15 wherein said capsules are formed of gelatin-gum arabic, and for each matrix the polymer is polyvinyl alcohol.

17. Temperature monitoring means as defined in claim 13 wherein each of said first and second materials is dispersed in its matrix in the form of finely divided naked aggregates, and for each matrix the polymer is polyvinyl butyral, polyurethane, or an acrylic resin.

18. Temperature monitoring means as defined in claim 13 wherein said-first-named material includes cholesteryl p-nonylphenyl carbonate, cholesteryl nonanoate, cholesteryl benzoate, and dicholesteryl carbonate; and said second material includes cholesteryl nonanoate, cholesteryl oleyl carbonate, and cholesteryl chloride.

19. Temperature monitoring means as defined in claim 18 wherein the components of said materials are present in the following approximate proportions, in percentages by weight:

### First-Named Material

| Component | Proportion |
|---|---|
| Cholesteryl p-nonylphenyl carbonate | 28.9 |
| Cholesteryl nonanoate | 36.8 |
| Cholesteryl benzoate | 15.1 |
| Dicholesteryl carbonate | 19.2 |

### Second Material

| | |
|---|---|
| Cholesteryl nonanoate | 55.4 |
| Cholesteryl oleyl carbonate | 33.4 |
| Cholesteryl chloride | 11.2 |

- 43 -

20. In combination with a heat-conductive container having a quantity of a heat-degradable physiologically active substance contained therein, said substance being at a temperature below a predetermined temperature for minimizing degradation thereof,

temperature monitoring means in heat-transfer relation to said container and comprising a cholesteric liquid crystalline phase material dispersed in a film-forming polymer matrix, said material being capable of existing at a temperature below its glass-transition temperature in a characteristic metastable ordered glass form exhibiting a color normally exhibited in its mesophase temperature range and which changes, irreversibly below such range, upon warming to its glass transition temperature, said material being in said characteristic form and exhibiting an irreversible color change when said substance substantially reaches said predetermined temperature upon warming, thereby to provide a visual indication of whether the temperature of the substance has risen substantially to said predetermined temperature at any time during the existence of the combination.

- 44 -

21.  A combination as defined in claim 20 wherein said temperature monitoring means further comprises a second cholesteric liquid crystalline phase material dispersed in a second film-forming polymer matrix, said second material exhibiting a reversible color change in its mesophase temperature range when the temperature of said substance approaches said predetermined temperature upon warming, to give a visual warning of such approach.

22.  A method of monitoring the temperature of a quantity of a heat-degradable physiologically active substance contained in a heat-conductive container and being at a temperature below a predetermined temperature for minimizing degradation thereof, which comprises providing in heat-transfer relation to said container a cholesteric liquid crystalline phase material dispersed in a film-forming polymer matrix, said material being capable of existing at a temperature below its glass-transition temperature in a characteristic metastable ordered glass form exhibiting a color normally exhibited in its mesophase temperature range and which changes, irreversibly below such range, upon warming to its glass transition temperature, said material being in said characteristic form and exhibiting an irreversible color change when said substance substantially reaches said predetermined temperature upon warming, thereby to provide a visual indication of whether the temperature of the substance

23.  A method as defined in claim 22 and further providing in heat-transfer relation to said container a second cholesteric liquid crystalline phase material dispersed in a second film-forming polymer matrix, said second material exhibiting a reversible color change in its mesophase temperature range when the temperature of said substance approaches said predetermined temperature upon warming, to give a visual warning of such approach.

24.  A temperature monitoring device adapted to be placed in heat-transfer relation to an object at an initial temperature below a predetermined temperature for both visually indicating whether the object has reached the predetermined temperature at any time after placing the device in such relation, and giving a visual warning when the temperature of the object approaches the predetermined temperature, which device comprises in combination: a first cholesteric liquid crystalline phase material dispersed in a film-forming matrix, said material being capable of existing at a temperature below its glass-transition temperature in a characteristic metastable ordered glass form exhibiting a color normally exhibited in its mesophase temperature range, the color of the material changing, irreversibly below such range, upon warming to its glass transition temperature, and which when the device is placed in said heat-transfer relation exhibits an irreversible color change when said object substantially reaches said predetermined temperature upon warming, thereby to provide a visual indication of whether the temperature of the object has risen substantially to said predetermined temperature at any time after the device is placed in said heat-transfer relation, with the object at said initial temperature and the material in said characteristic form; and a second cholesteric liquid crystalline phase material dispersed in a second film-forming matrix, said second material when the device is placed in said heat transfer relation exhibiting a reversible color change in its mesophase temperature range when the temperature of said object approaches said predetermined temperature upon warming, to give a visual warning of such approach.

25. A device as defined in claim 24 having substantially flat inner and outer surfaces; and including a self-supporting clear, transparent supportive and protective outer film carrying said first and second materials on its inner surface, and an inner layer of adhesive serving to place the device in intimate heat-conductive relation to said object.

26. A method of monitoring the temperature of an object existing at a temperature below a predetermined temperature, which comprises: providing in heat-transfer relation to said object a first cholesteric liquid crystalline phase material dispersed in a film-forming polymer matrix, said material being capable of existing at a temperature below its glass-transition temperature in a characteristic metastable ordered glass form exhibiting a color normally exhibited in its mesophase temperature range and which changes, irreversibly below such range, upon warming to its glass transition temperature, said material being in said characteristic form and exhibiting an irreversible color change when said object substantially reaches said predetermined temperature upon warming, thereby to provide a visual indication of whether the temperature of the object has risen substantially to said predetermined temperature at any time during the existence of the material in said heat-transfer relation: and further providing in heat-transfer relation to said object a second cholesteric liquid crystalline phase material dispersed in a second film-forming polymer matrix, said second material exhibiting a reversible color change in its mesophase temperature range when the temperature of said object approaches said predetermined temperature upon warming, to give a visual warning of such approach.

27. A method as defined in claim 26 wherein each of said first and second materials is microencapsulated in

- 48 -

gelatin-gum arabic capsules, and the capsules containing the materials are dispersed in their respective matrices.

28. A method as defined in claim 26 wherein each of said first and second materials is dispersed in its matrix in the form of finely divided naked aggregates.

FIG.1

FIG.2

DEGREES CENTIGRADE

1-3  4-6  7-9

FIG.3

FIG.4{

16

40
30

18
20
22

25
24
23

FIG.5{

16

34

18
20
22

25
24
23

FIG.6

57

52    54

50        56

DEGREES CENTIGRADE

48   47                    60

FIG.7

13    46    79

58    60    62    64

49

FIG.8

30

31

48

FIG.9

70    72    74    68

48

**European Patent Office**

**EUROPEAN SEARCH REPORT**

. Application number

EP 84 30 7350

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X,D | US-A-3 594 126 (J.L.FERGASON et al.) <br><br> * Figures 1-5; introduction; column 3, line 8 - column 7, line 13 * <br><br> --- | 1,2,4, 5,7, 9-12, 20,22, 24-28 | G 01 K 11/16 <br> G 01 K  3/00 <br> B 65 D 79/02 |
| X,D | US-A-4 161 557 (F.K.SUZUKI et al.) <br><br> * Figures 1-7; column 4, line 58 - column 17, line 49 * <br><br> --- | 1, 4- 19,22, 23 | |
| A | US-A-3 651 695 (V.R.BROWN) <br><br> * Figures 1,2; column 1, line 62 - column 2, line 60 * <br><br> ----- | 2,3, .13,15, 20,21 | |
| | | | TECHNICAL FIELDS SEARCHED (Int. Cl.4) |
| | | | G 01 K <br> A 61 J <br> B 65 D |

The present search report has been drawn up for all claims

| Place of search | Date of completion of the search | Examiner |
|---|---|---|
| THE HAGUE | 12-02-1985 | F.VISSER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82